# EUROPÄISCHE PATENTSCHRIFT

(11) **EP 1 869 289 B1**
(45) Veröffentlichungstag und Bekanntmachung des Hinweises auf die Patenterteilung: **03.12.2014**
(21) Anmeldenummer: 05797023.8
(22) Anmeldetag: 14.10.2005
(51) Int. Cl.: F01D 9/04, F02C 3/14, F01D 5/08, F02C 7/18, F01D 9/06, F01D 5/18

(54) **LEITSCHAUFELTRÄGER**
GUIDE VANE SUPPORT
SUPPORT D'AUBES DIRECTRICES

(30) Priorität: 11.04.2005 RU 2005110550
(43) Veröffentlichungstag der Anmeldung: 26.12.2007
(73) Patentinhaber: Alstom Technology Ltd, 5400 Baden (CH)
(72) Erfinder: FOKINE, Arkadi, Moskau, 109444 (RU); TRISHKIN, Alexander, Lytkarino, 140080 (RU); VASSILIEV, Vladimir, CH-5300 Turgi (CH); VINOGRADOV, Dimtry, Moskau, 115407 (RU)
(86) Internationale Anmeldenummer: PCT/EP2005/055261
(87) Internationale Veröffentlichungsnummer: WO 2006/108454

(56) Entgegenhaltungen:
- EP-A- 0 492 865
- EP-A- 0 509 802
- EP-A- 1 028 230
- WO-A-01/09518
- GB-A- 857 750
- US-A- 4 668 162
- US-A- 5 022 817
- US-B1- 6 485 255
- US-B1- 6 631 561

## Beschreibung

### Technisches Gebiet

Die Erfindung bezieht sich auf einen Leitschaufelträger gemäss dem Oberbegriff des Anspruchs 1. Sie bezieht sich weiterhin auf einen Stator einer Turbine sowie eine Gasturbogruppe.

### Stand der Technik

Die Heissgasteile und insbesondere die Schaufeln der Turbinen moderner Gasturbogruppen bedürfen der Kühlung. Thermisch besonders belastet und daher auf eine effiziente Kühlung angewiesen sind die Schaufeln der ersten Leitreihe der Turbine einer Gasturbogruppe. Zur Kühlung wird in einer nach dem Stand der Technik gängigen Lösung Verdichterluft entnommen und zur Kühlung der Komponenten eingesetzt. Die für die Kühlung verwendete Luft steht zur Verbrennung nicht zur Verfügung, wodurch die Leistung und die Effizienz der Gasturbogruppe sinken. Dieser Verlust wird aber durch die so ermöglichten höheren Heissgastemperaturen deutlich überkompensiert. In den Kühlluftanspeisungen für die Komponenten sind Drosselelemente angeordnet, welche den Komponenten einen Kühlluftmassenstrom zumessen, welcher gewährleistet, dass bestimmte Grenztemperaturen der Komponenten nicht überschritten werden. In den Schaüfelkränzen von Turbinen wird den Schaufeln ein Kühlluftmassenstrom zugemessen, welcher ausreicht, um bei den höchsten erwarteten Heissgastemperaturen eine ausreichende Kühlung und damit eine Mindestlebensdauer der Schaufeln zu gewährleisten. Im Interesse der Betriebssicherheit wird dabei eine Überkühlung und damit verbunden ein gewisser Mehrverbrauch an Kühlluft bewusst in Kauf genommen. Im Interesse verbesserter Leistungsdaten muss aber ein Ziel sein, den Verbrauch an Kühlluft in Grenzen zu halten. Mehrfach wurde daher schon, beispielsweise in der EP 1 028 230, der US 2,811,833, DE 34 24 229 oder der US 5,022,817 vorschlagen, die Kühlluft verstellbar und/oder regelbar auszugestalten. Aufgrund der geringeren inhärenten Sicherheit konnten sich derartige Aktivsysteme bis heute nicht umfassend durchsetzen.

### Darstellung der Erfindung

Gemäss einem Aspekt der Erfindung liegt dieser die Aufgabe zugrunde, einen Leitschaufelträger der eingangs genannten Art anzugeben, welcher die Nachteile des Standes der Technik vermeidet. Spezifischer soll der Leitschaufelträger so angegeben werden, dass die Kühlung der einzelnen Schaufeln der tatsächlich erwarteten thermischen Belastung angepasst ist. Gemäss einem weiteren Aspekt soll diese Aufgabe mit möglichst einfachen Mitteln und insbesondere ohne die Verwendung beweglicher Bauteile im Kühlluftpfad gelöst werden.

Diese Forderung erfüllt der im Anspruch 1 beschriebene Leitschaufelträger. Dieser ist besonders geeignet, wenn systematische Umfangsinhomogenitäten der thermischen Belastung der Schaufeln auftreten. Es hat sich gezeigt, dass besonders bei sogenannten Silobrennkammern eine systematische Umfangsinhomogenität der Heissgastemperatur in der Turbine auftritt. Die Inhomogenitäten setzen sich im Allgemeinen durch die gesamte Turbine fort. Dies führt dazu, dass ohne geeignete hier angegebene Massnahmen die Schaufeln in bestimmten Bereichen der Leitschaufelkränze, insbesondere des ersten und zweiten Leitschaufelkranzes, mit einer minimal verantwortbaren Kühlung betrieben werden, während andere Schaufeln mit deutlich höheren Kühlluftmassenströmen als notwendig versorgt werden.

Der beschriebene Leitschaufelträger umfasst also Aufnahmevorrichtungen für eine Mehrzahl von Leitschaufeln, sowie wenigstens zwei Anspeisungen zur Zufuhr von Kühlluft zu den Leitschaufeln, wobei in den Anspeisungen Mittel zur Drosselung einer Kühlluftströmung angeordnet sind. Die erste Anspeisung ist zur Zufuhr von Kühlluft zu wenigstens einer ersten Leitschaufel einer Leitschaufelreihe vorgesehen, und wenigstens eine zweite Anspeisung ist zur Zufuhr von Kühlluft zu wenigstens einer zweiten Leitschaufel einer Leitschaufelreihe vorgesehen. In einer Ausführungsform ist eine Anspeisung mit einem Drosselelement zur Zufuhr von Kühlluft zu einer Gruppe von mehreren Leitschaufeln vorgesehen. In einer anderen Weiterbildung des beschriebenen Gegenstands ist eine eigene Anspeisung für jede Leitschaufel vorgesehen. Wenigstens zwei Anspeisungen weisen Drosselelemente auf, welche unterschiedliche Druckverlustbeiwerte aufweisen. Mit anderen Worten sind die Drosselelemente so ausgeführt, dass den Leitschaufeln, die mit der jeweiligen Anspeisung verbunden sind, unterschiedliche Kühlluftmassenströme zugeführt werden. In einer Weiterbildung des vorgeschlagenen Leitschaufelträgers sind die Drosselungsmittel mit unterschiedlichen Druckverlustbeiwerten als Durchflussblenden mit unterschiedlichen freien Strömungsquerschnitten, zum Beispiel als Lochblenden mit unterschiedlichen Bohrungsdurchmessern, ausgeführt.

In einer Ausführungsform der Erfindung ist in einem ersten Umfangssegment des Leitschaufelträgers die Anordnung einer ersten Gruppe erster Leitschaufeln vorgesehen und in einem zweiten Umfangssegment ist die Anordnung einer zweiten Gruppe zweiter Leitschaufeln vorgesehen, wobei sich die ersten Leitschaufeln von den zweiten Leitschaufeln im Wesentlichen dadurch unterscheiden, dass sie von einer ersten beziehungsweise einer zweiten Anspeisung auf die oben beschriebene Weise mit unterschiedlichen Kühlluftmassenströmen versorgt werden. In einer Weiterbildung dieser Ausführungsform ist in wenigstens vier Umfangssegmenten die Anordnung je einer Gruppe von Leitschaufeln vorgesehen, wobei die Drosselungsmittel in den Anspeisungen für die Leitschaufeln wenigstens der benachbarten Segmente unterschiedliche Druckverlustbeiwerte aufweisen. Das heisst, die Schaufeln, die in einem ersten Segment angeordnet sind, werden mit einem anderen Kühlluftmassenstrom versorgt als die Schaufeln, die in einem benachbarten zweiten Segment angeordnet sind. Auch hierbei ist es wiederum möglich, dass mehrere oder alle in einem Segment anzuordnende Schaufeln von einer gemeinsamen Anspeisung mit einem Drosselelement mit Kühlluft versorgt werden, oder, in einer anderen Ausführungsform, für jede Schaufel eine eigene Anspeisung angeordnet ist, wobei innerhalb eines Segmentes alle Anspeisungen mit identischen Drosselelementen versehen sind.

Beschrieben wird weiterhin ein Stator einer Turbine, welcher einen Leitschaufelträger der oben angegebenen Art umfasst. In einer Weiterbildung umfasst der Stator wenigstens zwei Statorbaugruppen, wobei eine erste und eine zweite Baugruppe in einer parallel zur Rotorachse der Turbine orientierten Ebene zusammengefügt sind, beispielsweise mittels einer lösbaren Flanschverschraubung. Diese Bauart mit einer oberen und einer unteren Gehäusehälfte und einem waagerechten Trennflansch ist im Turbinenbau weit verbreitet, weil der Rotor bei abgenommenen Gehäuseoberteil besonders einfach zugänglich ist. Die Erfindung umfasst daher auch eine Statorbaugruppe, welche insbesondere als Gehäuseoberteil oder Gehäuseunterteil ausgeführt ist, und wenigstens ein Segment eines oben beschriebenen Leitschaufelträgers umfasst.

Die Erfindung umfasst auch eine Gasturbogruppe, welche einen solchen Stator und/oder einen Leitschaufelträger der oben beschriebenen Art aufweist. Bei dem Leitschaufelträger handelt es sich in einer Ausführungsform der Gasturbogruppe um den Leitschaufelträger der ersten Turbinenstufe. In einer anderen Ausführungsform handelt es sich um den Leitschaufelträger der zweiten Turbinenstufe. Besonders eignet sich der hier beschriebene Gegenstand zur Verwendung in einer Gasturbogruppe mit einer Silobrennkammer.

### Kurze Beschreibung der Zeichnung

Die Erfindung wird nachfolgend anhand eines in der Zeichnung illustrierten Ausführungsbeispiels näher erläutert. Im einzelnen zeigen
Figur 1 eine Gasturbogruppe mit Silobrennkammer;
Figur 2 eine Draufsicht auf den Leitschaufelkranz einer Turbinenstufe einer Gasturbogruppe;
Figur 3 ein Detail einer Kühlluftanspeisung für eine Schaufel des Schaufelkranzes; und
Figur 4 ein Beispiel für ein in einer Anspeisung für Kühlluft angeordnetes Drosselelement.

Die Darstellungen sind dabei stark schematisiert und fokussieren auf die Darstellung der für das Verständnis der Erfindung wesentlichen Merkmale.

### Wege zur Ausführung der Erfindung

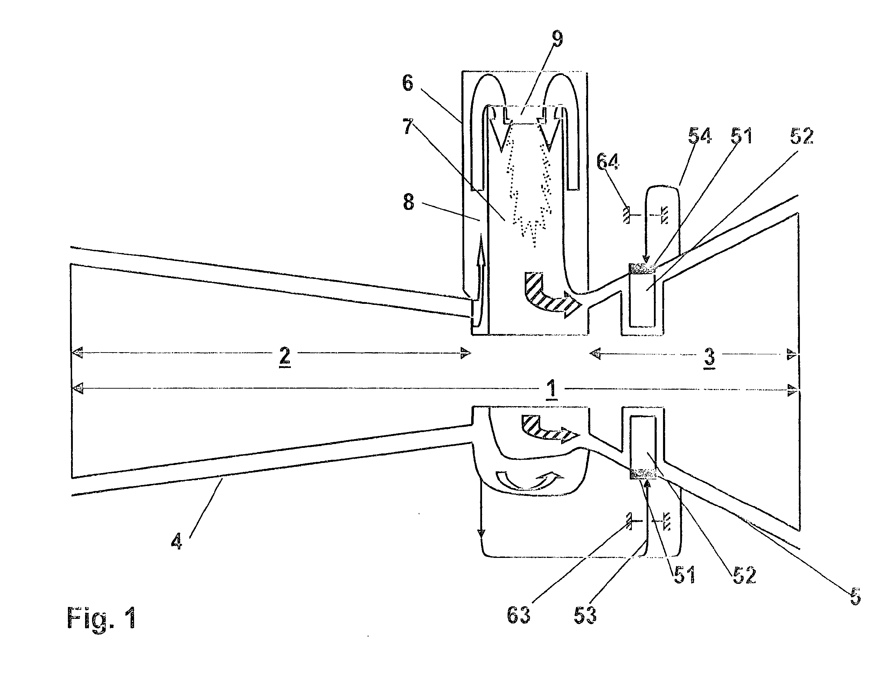

In der Figur 1 ist ein Beispiel für eine Gasturbogruppe mit einer Silobrennkammer dargestellt. Die Gasturbogruppe umfasst einen Rotor 1, der seinerseits einen Verdichterrotor 2 mit den nicht im Einzelnen dargestellten Verdichterlaufschaufeln sowie den Turbinenrotor 3 mit den ebenfalls nicht im Detail dargestellten Turbinenlaufschaufeln umfasst. Die statischen Komponenten der Gasturbogruppe umfassen den Verdichterstator 4 mit den nicht im Detail dargestellten Verdichterleitschaufeln sowie den Turbinenstator 5 mit den bis auf den zweiten Leitschaufelkranz nicht im Detail dargestellten Turbinenleitschaufeln. Der Turbinenstator umfasst insbesondere den Leitschaufelträger 51 für den zweiten Leitschaufelkranz, und die Leitschaufeln 52 des Leitschaufelkranzes der zweiten Turbinenleitreihe. Die Gasturbogruppe umfasst weiterhin eine Silobrennkammer 6. Die Silobrennkammer 6 umfasst einen Brennraum 7, sowie ein zwischen der Aussenwand der Brennkammer und der Brennraumwand gebildetes Brennkammerplenum 8. Im Betrieb der Gasturbogruppe wird Verbrennungsluft vom Verdichter verdichtet. Die verdichtete Verbrennungsluft strömt, durch die hellen Pfeile angedeutet, durch das Brennkammerplenum in den Brennraum 7 ein. Einem Brenner 9 wird auf nicht dargestellte, dem Fachmann aber geläufige Weise ein Brennstoff zugeführt, und dieser wird mit der Verbrennungsluft vermischt und, wie in der Figur angedeutet, im Brennraum verbrannt. Anstatt des dargestellten Einzelbrenners können an der Brennkammer auch mehrere Vormischbrenner Verwendung finden, was jedoch in keiner Weise erfindungsrelevant ist, sondern eine andere dem Fachmann an sich geläufige Ausführungsform darstellt. Die bei der Verbrennung entstehenden gespannten heissen Rauchgase strömen, durch die schraffierten Pfeile angedeutet, in die Turbine ein. Aufgrund der hohen auftretenden Temperaturen des Heissgases muss zumindest in den ersten Turbinenstufen eine Kühlung erfolgen, was dem Fachmann ebenfalls geläufig ist. In der Figur ist die Kühlluftzufuhr zum zweiten Leitschaufelkranz schematisch dargestellt. Am Austritt aus dem Verdichter wird Luft entnommen, und über Anspeisungen 53, 54 durch den Schaufelträger 51 zu den Leitschaufeln 52 geleitet. Der Kühlluftmassenstrom wird durch die Drosselelemente 63 und 64, beispielsweise Blenden, den Schaufeln zugemessen. Wie schon anhand der Figur vermutet werden kann, hat sich auch in der Praxis gezeigt, dass die Anströmung der Turbine aus einer Silobrennkammer in Umfangsrichtung des Schaufelkranzes vergleichsweise inhomogen ist. Um alle Schaufeln eines Leitschaufelkranzes vergleichbar zu belasten, ist daher der Kühlluftbedarf der Leitschaufeln unterschiedlich. Die dargestellte Gasturbogruppe weist daher 2 Anspeisungen 53, 54 für Kühlluft zu den Leitschaufeln auf, welche jeweils mit einem Drosselelement 63, 64 versehen sind, wobei die Drosselelemente unterschiedliche Druckverlustbeiwerte aufweisen, derart, dass den Schaufeln durch die Anspeisung unterschiedliche Kühlluftmassenströme zugeführt werden. Damit ist es möglich, Schaufeln, welche in Bereichen angeordnet sind, in denen sie mit höheren Heissgastemperaturen beaufschlagt werden, einen grösseren Kühlluftmassenstrom zuzuführen, und andererseits Schaufeln, welche mit geringeren Heissgastemperaturen beaufschlagt werden, einen kleineren Kühlluftmassenstrom zuzuführen.

Es versteht sich von selbst, dass die Ausführung in Umfangsrichtung unterschiedlicher Kühlluftanspeisungen auch bei anderen Leitschaufelreihen, beispielsweise der ersten oder der dritten Leitschaufelreihe, umgesetzt werden kann.

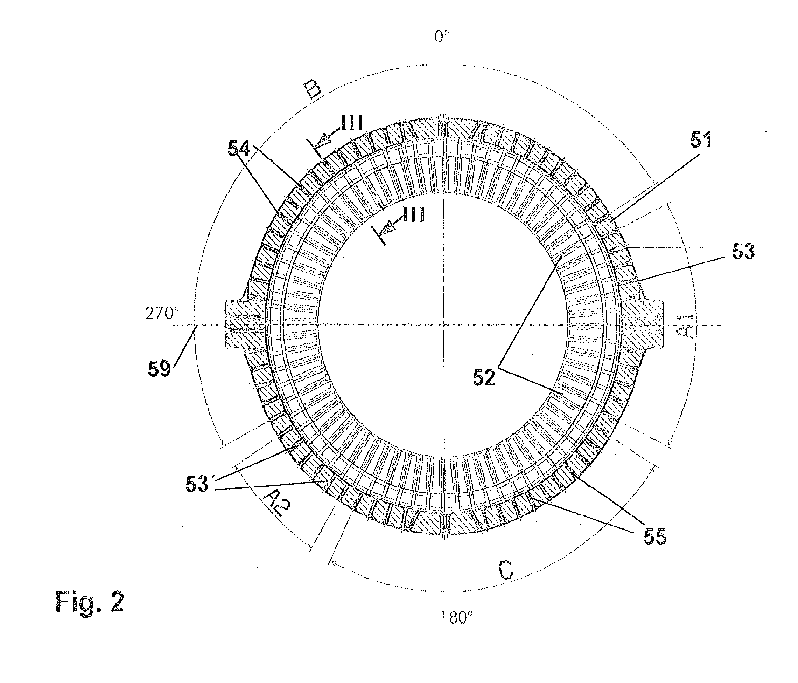

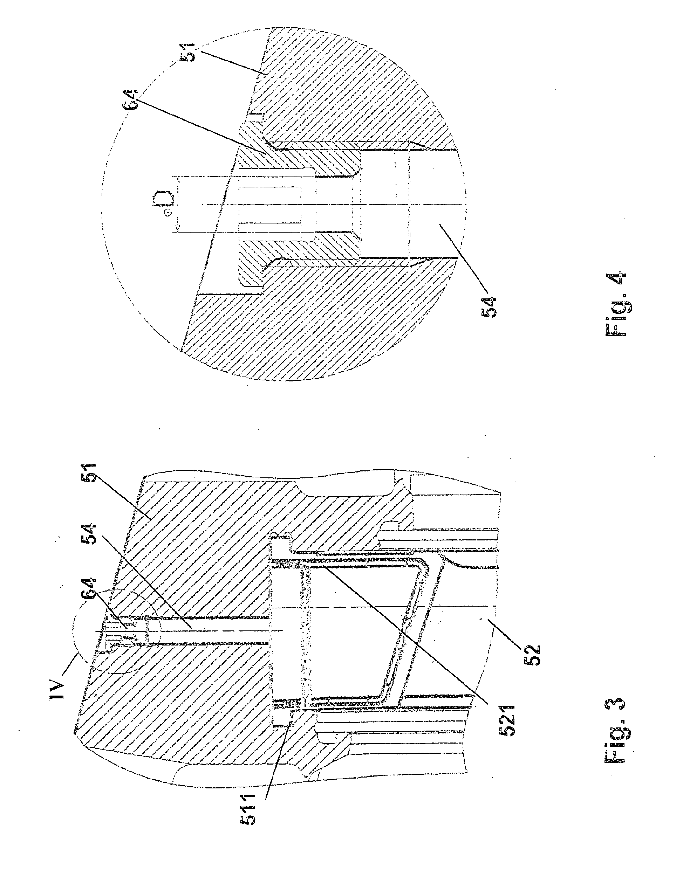

In der Figur 2 ist eine beispielhafte Draufsicht auf eine Leitschaufelreihe im Querschnitt einer Turbine gezeigt. Der Leitschaufelträger 51 ist zweiteilig ausgeführt. Ein Oberteil und ein Unterteil des Leitschaufelträgers sind an der mit 59 bezeichneten Trennlinie durch eine Flanschverschraubung lösbar miteinander verbunden. In Aufnahmevorrichtungen des Leitschaufelträgers sind die Leitschaufeln 52 angeordnet. Die Zufuhr von Kühlluft zu den Leitschaufeln erfolgt durch erste Anspeisungen 53, zweite Anspeisungen 54, dritte Anspeisungen 53' und vierte Anspeisungen 55. In der beispielhaft dargestellten Ausführungsform erfolgt die Zufuhr von Kühlluft zu jeder Leitschaufel über eine eigene Anspeisung. In jeder der Anspeisungen ist dabei ein Drosselelement angeordnet, welches in der Darstellung der Figur 2 nicht ersichtlich ist, und welches in den Figuren 3 und 4 näher dargestellt wird. Um der in Umfangsrichtung inhomogenen thermischen Belastung der Leitschaufeln Rechnung zu tragen, sind in den Umfangssegmenten A1 und A2 sowie B und C Drosselelemente mit unterschiedlichen Druckverlustbeiwerten angeordnet. Dabei sind beispielsweise in den Anspeisungen 53 und 53', welche in den mit A1 und A2 bezeichneten Umfangssegmenten liegen, Drosselelemente mit einem ersten Druckverlustbeiwert angeordnet. Beispielsweise handelt es sich um Lochblenden mit einem ersten Bohrungsdurchmesser. In den Anspeisungen 54, welche in dem mit B bezeichneten Umfangssegment angeordnet sind, sind Drosselelemente mit einem zweiten Druckverlustbeiwert angeordnet, welche einen geringeren Druckverlustbeiwert aufweisen als der erste Druckverlustbeiwert. So sind zum Beispiel Lochblenden angeordnet, welche einen grösseren Bohrungsdurchmesser aufweisen als der erste Bohrungsdurchmesser. Das heisst, die Schaufeln, welche in dem mit B gekennzeichneten Umfangssegment angeordnet sind, erhalten einen grösseren Kühlluftmassenstrom als die Schaufeln, die in den mit A1 und A2 bezeichneten Bereichen liegen. In den Anspeisungen 55, welche in dem mit C bezeichneten Umfangssegment angeordnet sind, sind Drosselelemente mit einem dritten Druckverlustbeiwert angeordnet, welche einen grösseren Druckverlustbeiwert aufweisen als der erste Druckverlustbeiwert. So sind zum Beispiel Lochblenden angeordnet, welche einen kleineren Bohrungsdurchmesser aufweisen als der erste Bohrungsdurchmesser. Das heisst, die Schaufeln, welche in dem mit C gekennzeichneten Umfangssegment angeordnet sind, erhalten einen kleineren Kühlluftmassenstrom als die Schaufeln, die in den mit A1 und A2 bezeichneten Bereichen liegen.

In einer Ausführungsform der Erfindung definieren sich die Bereiche wie folgt, wobei die angegebenen Winkel ab der mit 0° bezeichneten Positionen im Uhrzeigersinn gemessen werden. Dies ist die Position, die in Figur 1 oben liegt, oder allgemeiner, die Querrichtung aus der das Heissgas der Silobrennkammer zuströmt. Der Bereich A1 liegt zwischen 60° ±5° und 120° ±5°. Der Bereich A2 liegt zwischen 210° ±5° und 240° ±5°. Der Bereich B liegt zwischen 240° ±5° bis 60° ±5°. Der Bereich C liegt zwischen 120° ±5° und 210° ±5°. Dabei ist die Erstreckung jedes Bereiches im Uhrzeigersinn definiert. In einer Ausführungsform ist die Blickrichtung gegen die Strömungsrichtung gerichtet, das heisst, die Strömung strömt sozusagen aus der Zeichnungsebene heraus.

In einer Ausführungsform der Erfindung beträgt der Durchströmungsquerschnitt der dritten Drosselelemente im Bereich B rund 120% des Durchströmquerschnitts im Bereich A1 beziehungsweise A2. Alternativ beträgt der Bohrungsdurchmesser der dritten Drosselelemente im Bereich B rund 110 % des ersten Bohrungsdurchmessers der Drosselelemente im Bereich A1 beziehungsweise A2. Der Durchströmungsquerschnitt der vierten Drosselelemente im Bereich C beträgt dabei rund 72% des Durchströmquerschnitts im Bereich A1 beziehungsweise A2. Alternativ beträgt der Bohrungsdurchmesser der vierten Drosselelemente im Bereich C in einer beispielhaften Ausführungsform rund 85 % des ersten Bohrungsdurchmessers.

In der Figur 3 ist der Schnitt III-III aus der Figur 2 detaillierter dargestellt. Der Schaufelträger 51 umfasst Aufnahmevorrichtungen 511 für eine Mehrzahl von Leitschaufeln 52. In der Figur ist eine Leitschaufel mit ihrem Schaufelfuss 521 in der Aufnahmevorrichtung gehalten. Die Zufuhr von Kühlluft zur Schaufel erfolgt durch die Anspeisung 54 mit dem Drosselelement 64, welches als Einzelheit IV in der Figur 4 dargestellt ist. In die Anspeisung 54 ist eine Hülse 64 mit einer Bohrung mit dem Durchmesser D eingeschraubt, welche als Lochblende für die Kühlluftströmung wirkt und somit der Zumessung eines Kühlluftmassenstroms zur Schaufel dient.

Es versteht sich für den Fachmann von selbst, dass die hier anhand eines Ausführungsbeispiels beschriebene Erfindung nicht auf dieses Beispiel beschränkt ist, sondern dass von der in den Ansprüchen dargestellten Lehre auch andere teilweise deutlich verschiedene Ausführungsformen umfasst sind.

### Bezugszeichenliste

- 1: Rotor
- 2: Verdichterrotor
- 3: Turbinenrotor
- 4: Verdichterstator
- 5: Turbinenstator
- 6: Silobrennkammer
- 7: Brennraum
- 8: Brennkammerplenum
- 9: Brenner
- 51: Leitschaufelträger
- 52: Leitschaufel
- 53: Anspeisung für Kühlluft
- 53': Anspeisung für Kühlluft
- 54: Anspeisung für Kühlluft
- 55: Anspeisung für Kühlluft
- 59: Trennebene
- 63: Drosselstelle
- 64: Drosselstelle
- 511: Befestigungsvorrichtung
- 521: Schaufelfuss
- A1: Umfangssegment
- A2: Umfangssegment
- B: Umfangssegment
- C: Umfangssegment
- D: Bohrungsdurchmesser

## Patentansprüche

1. Turbomaschinen-Leitschäufelträger (51), umfassend Aufnahmevorrichtungen (511) für eine Mehrzahl von Leitschaufeln (52), wenigstens zwei Anspeisungen (53, 54) zur Zufuhr von Kühlluft zu den Leitschaufeln (52), und Mittel zur Drosselung (63, 64) einer Kühlluftströmung durch eine Anspeisung (53, 54), wobei wenigstens eine erste Anspeisung (53) zur Zufuhr von Kühlluft zu wenigstens einer ersten Leitschaufel vorgesehen ist und wenigstens eine zweite Anspeisung (54) zur Zufuhr von Kühlluft zu wenigstens einer zweiten Leitschaufel vorgesehen ist, **dadurch gekennzeichnet, dass** die Drosselungsmittel (63) in der wenigstens einen ersten Anspeisung (53) und die Drosselungsmittel (64) in der wenigstens einen zweiten Anspeisung (54) unterschiedliche Druckverlustbeiwerte aufweisen, und dass die Drosselungsmittel (63) der ersten Anspeisung (53) und die Drosselungsmittel (64) der zweiten Anspeisung (54) Lochblenden mit unterschiedlichen Bohrungsdurchmesser (D) sind.

2. Leitschaufelträger gemäss Anspruch 1, **dadurch gekennzeichnet, dass** die Drosselungsmittel (63, 64) als in die Anspeisungen (53, 54) einschraubbare, mit einer Bohrung versehene Hülsen ausgebildet sind.

3. Leitschaufelträger gemäss einem der vorstehenden Ansprüche, **dadurch gekennzeichnet, dass** für jede Leitschaufel (52) eine einzelne Anspeisung (53, 53' , 54, 55) vorgesehen ist.

4. Leitschaufelträger gemäss einem der vorstehenden Ansprüche, **dadurch gekennzeichnet, dass** in einem ersten Umfangssegment (A1) die Anordnung einer ersten Gruppe erster Leitschaufeln (53) vorgesehen ist und in einem zweiten Umfangssegment (B) die Anordnung einer zweiten Gruppe zweiter Leitschaufeln (54) vorgesehen ist, wobei die Kühlluftmassenströme zu den ersten und zweiten Leitschaufeln unterschiedlich bemessen werden.

5. Leitschaufelträger gemäss Anspruch 4, **dadurch gekennzeichnet, dass** in wenigstens vier Umfangssegmenten (A1, A2, B, C) die Anordnung je einer Gruppe von Leitschaufeln (53, 53', 54, 55) vorgesehen ist, wobei die Drosselungsmittel (63, 64) in den Anspeisungen für die Leitschaufeln wenigstens benachbarter Segmente unterschiedliche Druckverlustbeiwerte aufweisen.

6. Leitschaufelträger gemäss einem der Ansprüche 4 oder 5, **dadurch gekennzeichnet, dass** innerhalb einer Gruppe die Anspeisungen (53, 54) aller anzuordnenden Leitschaufeln (53, 53', 54, 55) Drosselungsmittel (63, 64) mit identischen Druckverlustbeiwerten aufweisen.

7. Stator (5) einer Turbine, umfassend einen Leitschaufelträger (51) gemäss einem der vorstehenden Ansprüche.

8. Stator gemäss Anspruch 7, welcher wenigstens zwei Statorbaugruppen umfasst, wobei eine erste und eine zweite Baugruppe in einer parallel zur Rotorachse der Turbine orientierten Ebene (59) zusammengefügt sind.

9. Statorbaugruppe eines Stators gemäss Anspruch 8.

10. Gasturbogruppe, umfassend einen Stator (5) gemäss einem der Ansprüche 7 oder 8.

11. Gasturbogruppe, umfassend einen Leitschaufelträger (52) gemäss einem der Ansprüche 1 bis 6.

12. Gasturbogruppe gemäss einem der Ansprüche 10 oder 11, **dadurch gekennzeichnet, dass** der Leitschaufelträger (52) einer zweiten Turbinenstufe als Leitschaufelträger gemäss einem der Ansprüche 1 bis 6 ausgeführt ist.

## Claims

1. Turbomachine guide vane carrier (51), comprising reception devices (511) for a plurality of guide vanes (52), at least two feeds (53, 54) for the supply of cooling air to the guide vanes (52), and means (63, 64) for throttling a cooling-air flow through a feed (53, 54), at least one first feed (53) being provided for the supply of cooling air to at least one first guide vane, and at least one second feed (54) being provided for the supply of cooling air to at least one second guide vane, **characterized in that** the throttling means (63) in the at least one first feed (53) and the throttling means (64) in the at least one second feed (54) have different pressure loss coefficients and **in that** the throttling means (63) of the first feed (53) and the throttling means (64) of the second feed (54) are perforated diaphragms with different bore diameters (D).

2. Guide vane carrier according to Claim 1, **characterized in that** the throttling means (63, 64) are in the form of sleeves having a bore which can be screwed into the feeds (53, 54).

3. Guide vane carrier according to one of the preceding claims, **characterized in that** a single feed (53, 53', 54, 55) is provided for each guide vane (52).

4. Guide vane carrier according to one of the preceding claims, **characterized in that** the arrangement of a first group of first guide vanes (53) is provided in a first circumferential segment (A1), and the arrangement of a second group of second guide vanes (54) is provided in a second circumferential segment (B), the cooling-air mass flows to the first and second guide vanes being dimensioned differently.

5. Guide vane carrier according to Claim 4, **characterized in that** the arrangement of a group of guide vanes (53, 53', 54, 55) is provided in each case in at least four circumferential segments (A1, A2, B, C), the throttling means (63, 64) in the feeds for the guide vanes of at least adjacent segments having different pressure loss coefficients.

6. Guide vane carrier according to either one of Claims 4 and 5, **characterized in that**, within a group, the feeds (53, 54) of all the guide vanes (53, 53', 54, 55) to be arranged have throttling means (63, 64) with identical pressure loss coefficients.

7. Stator (5) of a turbine, comprising a guide vane carrier (51) according to one of the preceding claims.

8. Stator according to Claim 7, which comprises at least two stator subassemblies, a first and a second subassembly being assembled in a plane (59) oriented parallel to the rotor axis of the turbine.

9. Stator subassembly of a stator according to Claim 8.

10. Gas turbo group, comprising a stator (5) according to either one of Claims 7 and 8.

11. Gas turbo group, comprising a guide vane carrier (52) according to one of Claims 1 to 6.

12. Gas turbo group according to either one of Claims 10 and 11, **characterized in that** the guide vane carrier (52) of a second turbine stage is designed as a guide vane carrier according to one of Claims 1 to 6.

## Revendications

1. Support d'aubes directrices (51) de turbomachines, comportant des dispositifs de réception (511) pour une pluralité d'aubes directrices (52), au moins deux alimentations (53, 54) pour l'amenée d'air de refroidissement jusqu'aux aubes directrices (52), et des moyens d'étranglement (63, 64) d'un flux d'air de refroidissement à travers une alimentation (53, 54), au moins une première alimentation (53) étant prévue pour l'amenée d'air de refroidissement jusqu'à au moins une première aube directrice et au moins une deuxième alimentation (54) étant prévue pour l'amenée d'air de refroidissement jusqu'à au moins une deuxième aube directrice, **caractérisé en ce que** les moyens d'étranglement (63) dans l'au moins une première alimentation (53) et les moyens d'étranglement (64) dans l'au moins une deuxième alimentation (54) présentent des coefficients de perte de pression différents, et **en ce que** les moyens d'étranglement (63) de la première alimentation (53) et les moyens d'étranglement (64) de la deuxième alimentation (54) sont des diaphragmes perforés présentant des diamètres d'alésage (D) différents.

2. Support d'aubes directrices selon la revendication 1, **caractérisé en ce que** les moyens d'étranglement (63, 64) sont réalisés sous forme de douilles pouvant être vissées dans les alimentations (53, 54) et pourvues d'un alésage.

3. Support d'aubes directrices selon l'une quelconque des revendications précédentes, **caractérisé en ce qu'**une alimentation (53, 53', 54,55) individuelle est prévue pour chaque aube directrice (52).

4. Support d'aubes directrices selon l'une quelconque des revendications précédentes, **caractérisé en ce que** l'agencement d'un premier groupe de premières aubes directrices (53) est prévu dans un premier segment périphérique (Al) et l'agencement d'un deuxième groupe de deuxièmes aubes directrices (54) est prévu dans un deuxième segment périphérique (B), les flux massiques d'air de refroidissement vers les premières et les deuxièmes aubes directrices étant dimensionnés différemment.

5. Support d'aubes directrices selon la revendication 4, **caractérisé en ce que** l'agencement d'un groupe respectif d'aubes directrices (53, 53', 54, 55) est prévu dans au moins quatre segments périphériques (Al, A2, B, C), les moyens d'étranglement (63, 64) dans les alimentations pour les aubes directrices de segments au moins adjacents présentant des coefficients de perte de pression différents.

6. Support d'aubes directrices selon l'une quelconque des revendications 4 et 5, **caractérisé en ce que**, dans un groupe, les alimentations (53, 54) de toutes les aubes directrices (53, 53', 54, 55) devant être agencées comprennent des moyens d'étranglement (63, 64) présentant des coefficients de perte de pression identiques.

7. Stator (5) d'une turbine, comportant un support d'aubes directrices (51) selon l'une quelconque des revendications précédentes.

8. Stator selon la revendication 7, lequel comporte au moins deux sous-ensembles de stator, un premier et un deuxième sous-ensemble étant assemblés dans un plan (59) orienté parallèlement à l'axe de rotor de la turbine.

9. Sous-ensemble de stator d'un stator selon la revendication 8.

10. Groupe turbine à gaz, comportant un stator (5) selon l'une quelconque des revendications 7 et 8.

11. Groupe turbine à gaz, comportant un support d'aubes directrices (52) selon l'une quelconque des revendications 1 à 6.

12. Groupe turbine à gaz selon l'une quelconque des revendications 10 et 11, **caractérisé en ce que** le support d'aubes directrices (52) d'un deuxième étage de turbine est réalisé sous forme de support d'aubes directrices selon l'une quelconque des revendications 1 à 6.
